(19) Europäisches Patentamt
European Patent Office
Office européen des brevets

(11) **EP 2 162 492 B1**

(12) **FASCICULE DE BREVET EUROPEEN**

(45) Date de publication et mention de la délivrance du brevet:
**30.05.2018 Bulletin 2018/22**

(51) Int Cl.:
**C08L 9/06** *(2006.01)*    **C08L 95/00** *(2006.01)*

(21) Numéro de dépôt: **08826752.1**

(86) Numéro de dépôt international:
**PCT/FR2008/000896**

(22) Date de dépôt: **25.06.2008**

(87) Numéro de publication internationale:
**WO 2009/016281 (05.02.2009 Gazette 2009/06)**

(54) **LIANT CONCENTRE NON GELIFIABLE ET POMPABLE POUR BITUME/POLYMERE**

NICHT GELIERBARER UND PUMPBARER KONZENTRIERTER BINDER FÜR BITUMEN/POLYMER

NON-GELLABLE AND PUMPABLE CONCENTRATED BINDER FOR BITUMEN/POLYMER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.06.2007  FR 0704564**

(43) Date de publication de la demande:
**17.03.2010  Bulletin 2010/11**

(73) Titulaire: **TOTAL MARKETING SERVICES**
**92800 Puteaux (FR)**

(72) Inventeurs:
• **GAUTHIER, Gilles**
**F-69390 Vourles (FR)**
• **DULAC, Guillaume**
**F-69230 Saint-Genis Laval (FR)**

(74) Mandataire: **Corizzi, Valérie et al**
**PACT-IP**
**37, rue Royale**
**92210 Saint-Cloud (FR)**

(56) Documents cités:
**EP-A- 0 020 203    EP-A- 0 409 683**
**GB-A- 414 336    JP-A- 58 204 203**

EP 2 162 492 B1

**Description**

DOMAINE TECHNIQUE

La présente invention appartient au domaine des bitumes/polymères. Plus spécifiquement, elle concerne des liants concentrés pour bitume/polymère à très forte teneur en polymère.

L'invention concerne aussi le procédé de préparation de ces liants concentrés en polymère. L'invention concerne également l'utilisation de ces liants concentrés pour la préparation des liants bitumineux dilués destinés aux domaines des applications routières, notamment dans la fabrication de liants routiers, et dans les domaines des applications industrielles.

CONTEXTE TECHNIQUE/ART ANTERIEUR

La réticulation, par exemple au soufre, de polymères portant des insaturations, notamment de copolymères de styrène et d'un diène conjugué tel que le butadiène, au sein de bitumes conduit à des compositions bitume/polymère, qui possèdent une stabilité améliorée et d'excellentes caractéristiques physico-mécaniques. Ces compositions bitume/polymère sont utilisables pour la réalisation de revêtements présentant des caractéristiques améliorées par rapport aux revêtements obtenus à partir de bitumes seuls.

La préparation de compositions bitume/polymère du type précité, pour lesquelles le polymère réticulable par exemple au soufre est un copolymère de styrène et d'un diène conjugué, est décrite, notamment, dans les citations FR2376188, FR2528439, EP0360656 et EP0299820.

Les compositions bitume/polymère, à partir desquelles on produit par dilution des liants bitume/polymère, sont également appelées « concentrés bitume/polymère ». Ces concentrés bitume/polymère sont plus économiques à préparer et à transporter que les compositions bitume/polymère diluées à teneur plus faible en polymère (quantités moindres à transporter donc coûts de transports moindres). De tels concentrés peuvent être dilués au moment de l'utilisation, par addition de bitume, pour obtenir des liants bitume/polymère à teneur plus faible en polymère utilisés habituellement pour la réalisation de revêtements. Les concentrés bitume/polymère sont préparés à des teneurs en polymère inférieures à un seuil, qui peut varier d'environ 3 à 6 % en poids du bitume. En effet dès que la teneur en polymère des concentrés bitume/polymère dépasse le seuil précité, il existe un risque important de gélification des concentrés bitume/polymère lors de leur préparation ou au cours de leur stockage. Il est donc difficile, dans la pratique, de produire des concentrés bitume/polymère non gélifiables à teneur élevée en polymère. Par ailleurs les concentrés bitume/polymère sont plus visqueux et donc difficilement pompables.

Le brevet JP-A-58 204203 décrit une composition de liant concentré utilisée en tant qu'additif pour des compositions à base de bitume comprenant 100 parties en poids d'une base pétrolière aromatique issues de la distillation sous-vide du pétrole brut et 1 à 30 parties en poids d'un polymère tel que le caoutchouc naturel, un caoutchouc synthétique ou un copolymère styrène-isoprène.

Le brevet EP-A-20203 divulgue la préparation de compositions bitume-polymère par mélange avec un bitume d'une solution mère (liant concentré) à base d'un copolymère bloc butadiène-styrène et d'une coupe lourde à caractère aromatique issue du craquage de fractions de distillation de brut pétrolier. La teneur en styrène du copolymère est de 15% à 55% en poids et la teneur en butadiène varie de 45% à 85% en poids. La proportion du copolymère dans la solution mère est de l'ordre de 5% à 30% en poids. Le craquage transforme les hydrocarbures lourds du pétrole en hydrocarbures légers.

Le brevet EP-A-409683 se réfère à une composition bitume/polymère où le polymère est choisi parmi les copolymères blocs styrène/butadiène ayant une teneur pondérale en styrène allant de 15% à 40%. Pour préparer la composition bitume/polymère, la composition mère, un agent anti-gélifiant (suif propylène triamine) et un agent de couplage (soufre) sont mélangés dans le bitume en opérant à une température entre 100°C et 230°C. Les coupes hydrocarbonées de D3 sont obtenues par distillation atmosphérique du pétrole brut.

Le brevet GB-A-414 336 décrit un procédé de préparation d'éthylène-bis(stéréamide) en tant que cire.

OBJECTIFS

Dans ces circonstances, la présente invention vise l'obtention de liants concentrés à très forte teneur en polymère.

Un autre objectif de l'invention est de proposer des liants concentrés à très forte teneur en polymère à gélification retardée.

Un autre objectif de l'invention est de proposer des liants concentrés à très forte teneur en polymère qui sont stables au stockage.

Un autre objectif de l'invention est de proposer des liants concentrés à très forte teneur en polymère qui ont une viscosité réduite et sont donc pompables au moyen des systèmes conventionnels de pompage.

Un autre objectif de l'invention est de proposer des liants concentrés à très forte teneur en polymère permettant la réduction des coûts de transports et de logistique.

Un autre objectif de l'invention est de proposer des liants concentrés à très forte teneur en polymère qui peuvent être facilement dilués, si besoin est, par du bitume pour produire des liants dilués bitume/polymère utilisés habituellement pour la réalisation de revêtements et notamment de revêtements routiers.

Un autre objectif de l'invention est de proposer des liants concentrés à très forte teneur en polymère qui une fois dilués par du bitume, répondent aux spécifications en place.

D'autres objectifs et avantages de la présente invention apparaîtront au cours de la description qui va suivre.

BREVE DESCRIPTION

En premier lieu, la présente invention concerne un liant concentré en polymère comprenant au moins 70% en masse d'une base pétrolière molle aromatique, éventuellement une base bitumineuse et au moins un polymère, la teneur en polymère dans le liant concentré est supérieure ou égale à 20% en masse, de préférence supérieure ou égale à 25% en masse, et en ce que la base pétrolière molle aromatique comprend une ou plusieurs coupes pétrolières aromatiques provenant de la désaromatisation de coupes pétrolières issues du raffinage du pétrole brut et/ou provenant de la désaromatisation de bases lubrifiantes. De préférence, le liant concentré comprend de 0 à 30% en masse de base bitumineuse, de préférence de 1% à 25% en masse.

De préférence, le liant concentré comprend en outre de 0 à 2% en masse, de préférence de 0,1 à 0,5%, d'agent anti-gélifiant.

De préférence, le liant concentré comprend en outre de 0 à 2% en masse d'un agent réticulant, de préférence de 0,1 à 0,5%.

De préférence, le liant concentré comprend en outre de 0 à 20% en masse d'une cire, de préférence de 1 à 10%.

De préférence, le polymère comprend un ou plusieurs copolymères à base de motifs diène conjugué et de motifs hydrocarbure monovinyl aromatique.

De préférence, le diène conjugué est choisi parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

De préférence, l'hydrocarbure monovinyl aromatique est choisi parmi le styrène, l'o-méthyl styrène, le p-méthyl styrène, le p-tert-butylstyrène, le 2,3 diméthyl- styrène, l'$\alpha$-méthyl styrène, le vinyl naphtalène, le vinyl toluène, le vinyl xylène, et analogues ou leurs mélanges, en particulier le styrène.

De préférence, le polymère est un copolymère à base de motifs butadiène et de motifs styrène.

De préférence, la teneur pondérale en styrène dans le polymère est de 5 à 50%, de préférence de 20 à 50%.

De préférence, la teneur pondérale en butadiène dans le polymère est de 50 à 95%.

De préférence, la teneur pondérale en butadiène 1-2 dans le polymère est de 5 à 70%.

De préférence, les coupes pétrolières sont issues de la distillation sous-vide du pétrole brut. De préférence, les coupes pétrolières aromatiques ont une teneur en cycles aromatiques supérieure à 50% en poids, de préférence supérieure à 65% en poids de préférence de 50% à 80% en poids.

De préférence, les coupes pétrolières aromatiques ont une viscosité cinématique supérieure à 5 mm$^2$/s à 100°C, de préférence supérieure à 20 mm$^2$/s, de préférence supérieure à 50 mm$^2$/s, de préférence de 50 à 85 % mm$^2$/s.

De préférence, les coupes pétrolières aromatiques ont un point éclair Cleaveland supérieur à 170°C, de préférence supérieur à 200°C, de préférence de 170°C à 250°C.

De préférence, la base bitumineuse est choisie parmi les bitumes d'origine naturelle, les bitumes d'origine synthétique et/ou les bitumes provenant du raffinage du pétrole brut.

De préférence, la cire a un point de fusion supérieur à 90°C, de préférence supérieur à 100°C, de préférence de 90 à 150°C.

De préférence, la cire est choisie parmi les paraffines ou les amides d'acides gras.

De préférence, la cire est une cire de polyméthylène ou de polyéthylène.

De préférence, la cire est issue du procédé Fischer-Trospch et comprend de 30 à 100 atomes de carbone.

De préférence, la cire est l'éthylène-bis(stéaramide) de formule C$_{17}$H$_{35}$-CONH-CH$_2$-CH$_2$-NHCO-C$_{17}$H$_{35}$.

De préférence, l'agent anti-gélifiant est choisi parmi des composés azotés (CAZ) ou des sels métalliques.

De préférence, l'agent anti-gélifiant est choisi parmi les composés azotés CAZ de masse moléculaire supérieure à 90, produit de réaction entre des acides carboxyliques tels que l'acide formique et des polyalkylène polyamines à chaîne(s) grasse(s) de formule générale (I) : (I) R-NH-[(CH$_2$)$_n$-NH]$_m$-H où R représente une chaîne hydrocarbonée linéaire, saturée et insaturée, pouvant comporter de 8 à 22 atomes de carbone, n un nombre entier de 1 à 5 et m un nombre entier de 1 à 5.

De préférence, l'agent anti-gélifiant est le N-suif amino-3 propyl-1 tétrahydro-1,4,5,6 pyrimidine.

De préférence, l'agent réticulant est choisi dans le groupe formé par (i) les agents de couplage donneur de soufre, (ii) les agents de fonctionnalisation pris parmi les acides ou esters carboxyliques à groupements thiols ou disulfures et (iii) les composés peroxydes générant des radicaux libres.

De préférence, l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

De préférence, le liant concentré en polymère a une viscosité dynamique à 180°C est inférieure à 3000 mPa.s, de préférence de 800 à 1500 mPa.s.

En deuxième lieu, l'invention concerne un procédé de préparation de liants concentrés tels que définis ci-dessus comprenant les étapes :

a) on introduit une base molle aromatique et éventuellement une base bitumineuse dans un récipient équipé de moyens de mélange, et on porte le mélange à une température comprise entre 140 et 200°C,
b) on introduit au moins 10% en masse de polymère et de 0 à 20% en masse de cire,
c) on chauffe la composition à une température comprise entre 140 et 200°C, sous agitation, jusqu'à l'obtention d'une composition homogène.
d) on introduit de 0 à 2% en masse d'agent anti-gélifiant et de 0 à 2% en masse d'agent réticulant.
e) on chauffe la composition à une température comprise entre 140 et 200°C, sous agitation, jusqu'à l'obtention d'un liant concentré homogène.

L'invention concerne en outre l'utilisation d'un liant concentré selon l'invention dans la préparation d'un liant dilué bitume/polymère obtenu par dilution du liant concentré selon l'invention avec du bitume.

L'invention concerne enfin l'utilisation du liant concentré tel que défini ci-dessus pour préparer un liant dilué bitume/polymère comprenant la dilution dudit liant concentré en polymère avec du bitume.

De préférence, l'utilisation du liant bitume/polymère dilué directement ou après mise en émulsion est dirigée à la réalisation de revêtements, notamment revêtements routiers du type enduits superficiels, à la production d'enrobés mis en place à chaud ou à froid, ou encore à la réalisation de revêtements d'étanchéité.

De préférence, l'utilisation du liant bitume/polymère dilué en mélange avec des granulats est pour fabriquer un enduit superficiel, un enrobé à chaud, un enrobé à froid, un enrobé coulé à froid, une grave émulsion ou une couche de roulement.

De préférence, l'utilisation du liant bitume/polymère dilué est pour fabriquer un revêtement d'étanchéité, une membrane ou une couche d'imprégnation.

DESCRIPTION DETAILLEE

L'invention concerne des liants concentrés en polymère. Les polymères utilisables selon l'invention sont les polymères classiquement utilisables dans le domaine des bitumes/polymères comme par exemple les polybutadiènes, les polyisoprènes, les caoutchoucs butyle, les polyacrylates, les polymétacrylates, les polychloroprènes, les polynorbornènes, les polybutènes, les polyisobutènes, les polyéthylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment terpolymère éthylène/acrylate de méthyle/méthacrylate de glycidyle et terpolymères éthylène /acrylate ou méthacrylate d'alkyle/anhydride maléique et notamment terpolymère éthylène/acrylate de butyle/anhydride maléique.

Les polymères peuvent également être les polymères décrits dans les brevets EP1572807, EP0837909 et EP1576058 de la société demanderesse.

Les polymères préférés sont les copolymères à base de motifs diène conjugué et de motifs hydrocarbure monovinyl aromatique. Les polymères selon l'invention comprennent un ou plusieurs copolymères à base de motifs diène conjugué et de motifs hydrocarbure monovinyl aromatique.

Le diène conjugué est choisi parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

L'hydrocarbure monovinyl aromatique est choisi parmi le styrène, l'o-méthyl styrène, le p-méthyl styrène, le p-tert-butylstyrène, le 2,3 diméthyl- styrène, l'$\alpha$-méthyl styrène, le vinyl naphtalène, le vinyl toluène, le vinyl xylène, et analogues ou leurs mélanges, en particulier le styrène.

Plus particulièrement, le polymère consiste en un ou plusieurs copolymères choisis parmi les copolymères séquencés, de styrène et de butadiène, de styrène et d'isoprène, de styrène et de chloroprène, de styrène et de butadiène carboxylé ou encore de styrène et d'isoprène carboxylé. En particulier le polymère est un copolymère à base de motifs butadiène et de motifs styrène.

Le copolymère de styrène et de diène conjugué, en particulier le copolymère de styrène et de butadiène, possède avantageusement une teneur pondérale en styrène allant de 5 à 50%, de préférence de 20 à 50%.

Le copolymère de styrène et de diène conjugué, en particulier le copolymère de styrène et de butadiène, possède avantageusement une teneur pondérale en butadiène (1-2 et 1-4) allant de 50 à 95%.

Le copolymère de styrène et de diène conjugué, en particulier le copolymère de styrène et de butadiène, possède avantageusement une teneur pondérale en butadiène 1-2 allant de 5 à 70%. Les motifs butadiène 1-2 sont les motifs qui résultent de la polymérisation via l'addition 1-2 des motifs butadiène.

La masse moléculaire moyenne du copolymère de styrène et de diène conjugué, et notamment celle du copolymère de styrène et de butadiène, peut être comprise, par exemple, entre 10 000 et 500 000, de préférence entre 50 000 et 200 000 et plus préférentiellement de 50 000 à 150 000 daltons.

Le liant concentré selon l'invention comprend au moins 20% en masse de polymère, de préférence au moins 25% en masse.

De préférence, le liant concentré comprend de 20 à 40% en masse de polymère, plus préférentiellement de 25 à 35% en masse ou encore 20 à 30% en masse de polymère.

Le liant concentré selon l'invention comprend également une base pétrolière molle aromatique indispensable pour obtenir les liants concentrés en polymère selon l'invention. La base pétrolière molle aromatique comprend une ou plusieurs coupes pétrolières aromatiques prises seule ou en mélanges. Ces coupes pétrolières aromatiques sont les produits aromatiques provenant de la désaromatisation (ou extraction au solvant des composés ou produits aromatiques) de coupes pétrolières issues du raffinage du pétrole brut, en particulier de coupes pétrolières issues de la distillation sous-vide du pétrole brut et/ou provenant de la désaromatisation (ou extraction au solvant des composés ou produits aromatiques) de bases lubrifiantes. Cette extraction des composés aromatiques se fait à l'aide d'un solvant tel que le furfural.

Les coupes pétrolières aromatiques constituant la base molle aromatique sont riches en composés aromatiques. La teneur en composés aromatiques ou cycles aromatiques des coupes pétrolières aromatiques est supérieure à 50% en poids, de préférence supérieure à 65% en poids. La forte teneur en composés aromatiques permet notamment de compatibiliser le polymère dans la base molle aromatique.

De plus, la viscosité cinématique des coupes pétrolières aromatiques constituant la base molle aromatique est supérieure à 5 mm$^2$/s à 100°C, de préférence supérieure à 20 mm$^2$/s, de préférence supérieure à 50 mm$^2$/s de préférence comprise entre 50 et 85 mm$^2$/s. Ces viscosités sont assez faibles ce qui permet à la base molle aromatique d'être relativement fluide.

Le point éclair Cleaveland des coupes pétrolières aromatiques est supérieur à 170°C, de préférence supérieure à 200°C de préférence compris entre 170°C et 250°C.

Le liant concentré selon l'invention comprend au moins 70% en masse de base pétrolière molle aromatique, de préférence entre 70 et 90%.

Le liant concentré selon l'invention peut éventuellement comprendre une base bitumineuse. Celle-ci n'est pas nécessaire pour obtenir des liants concentrés homogènes et stables. Le bitume ou mélange de bitumes selon l'invention est choisi avantageusement parmi les divers bitumes qui ont une pénétrabilité comprise entre 0 et 500 1/10 mm. Les liants selon l'invention peuvent contenir des bitumes issus de différentes origines. On peut citer tout d'abord les bitumes d'origine naturelle, ceux contenus dans des gisements de bitume naturel, d'asphalte naturel ou les sables bitumineux. Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Enfin, les bitumes selon l'invention peuvent aussi être des bitumes dits « synthétiques », par exemple les liants synthétiques clairs colorables par addition de pigments. Il peut s'agir par exemple de résines de pétrole ou de résines indène-coumarone, en mélange avec des hydrocarbures aromatiques et/ou paraffiniques. Le liant hydrocarboné concentré selon l'invention comprend de 0 à 30% en masse de base bitumineuse, de préférence de 1% à 25% en masse.

Le liant concentré selon l'invention peut aussi comprendre des cires. Les cires participent au renforcement du liant dilué à basse température et à la fluidification du liant dilué à haute température. Les cires utilisées dans l'invention sont des cires ayant un point de fusion supérieur à 90°C, de préférence supérieur à 100°C. Les cires peuvent être d'origine pétrolière, animale ou végétale ou provenir de l'industrie chimique. Les cires préférées sont des paraffines ou des amides d'acides gras.

Les paraffines sont notamment choisies parmi les polyalkylènes. De préférence, on utilisera selon l'invention des paraffines de polyméthylène et des paraffines de polyéthylène. De préférence, les paraffines auront des longueurs de chaîne comprise entre 40 et 100 atomes de carbone. Selon une variante préférée de l'invention, les paraffines utilisées sont des paraffines synthétiques issues de la conversion de la biomasse et/ou du gaz naturel.

Selon un mode préféré de l'invention, les paraffines sont des paraffines de polyméthylène, en particulier des paraffines synthétiques de polyméthylène en particulier issues de la conversion de gaz de synthèse par le procédé Fischer-Tropsch.

Selon un autre mode préféré de l'invention, les cires utilisées sont des amides, bis-amides ou polyamides d'acides gras. Les amides d'acides gras sont des amides d'acides gras avec un nombre de carbones supérieur ou égal à 18, notamment choisis parmi les stéaramides, les oléamides, les erucamides, les palmitamides. On préfère l'éthylène-bis(stéaramide) de formule $C_{17}H_{35}$-CONH-CH$_2$-CH$_2$-NHCO-C$_{17}$H$_{35}$.

Le liant concentré selon l'invention comprend de 0 à 20% de cire en masse, de préférence de 1 à 10% ou encore de 2 à 5% en masse.

Le liant concentré selon l'invention comprend éventuellement un agent anti-gélifiant. Les agents anti-gélifiant utilisables selon l'invention peuvent être des composés azotés (CAZ) ou des sels métalliques. Ces agents anti-gélifiants ne sont pas indispensables pour obtenir des liants concentrés homogènes et stables selon l'invention. Ils peuvent cependant être ajoutés en complément pour retarder encore un peu plus la gélification.

Les composés azotés (CAZ) ont une masse moléculaire supérieure à 90 et sont choisis parmi les produits de réaction entre des acides carboxyliques tels que l'acide formique et des polyalkylène polyamines à chaîne(s) grasse(s) de formule générale (I):

$$(I) \qquad R\text{-}NH\text{-}[(CH_2)_n\text{-}NH]_m\text{-}H$$

où R représente une chaîne hydrocarbonée linéaire, saturée et insaturée, pouvant comporter de 8 à 22 atomes de carbone, n un nombre entier de 1 à 5 et m un nombre entier de 1 à 5.

La préparation des composés azotés (CAZ) est décrite dans le brevet FR2259824.

Selon un mode préféré de l'invention, le composé azoté (CAZ) est un mélange complexe de produits pouvant comporter des groupements amines non modifiés et/ou des groupements amides et/ou des éléments de structure formamidine cyclique du type tétrahydropyrimidine obtenus, d'une part, à partir d'un groupement carboxylique fourni par l'acide formique, et, d'autre part, à partir du groupement amine primaire terminal et du groupe amine secondaire le plus proche fournis par des polyalkylène polyamines à chaîne(s) grasse(s) de formule (I) susdéfinis.

Comme exemple de tels composés azotés (CAZ) on peut citer, à titre non limitatif, la décényl-9 amine, la dodécényl-9 amine, l'hexadécényl-9 amine, l'octadécényl-6 amine, l'oléylamine ou octadécényl-9 amine, la décatriényl-2,4,6 amine, l'octadéca-triényl-9,12,15 amine, le chlorhydrate de suif propylène diamine, le chlorhydrate de suif propylène-triamine, la N, N-diméthyloléylamide, la N,N-diéthyloléylamide, l'oléyl-2 (hydroxy-2 éthyl)-1 imidazoline, l'amine de suif, l'amine de coprah, la suif propylène triamine.

Un composé azoté (CAZ) préféré est la N-suif amino-3 propyl-1 tétrahydro-1,4,5,6 pyrimidine, commercialisée sous le nom de Polyram L200® par la société CECA.

L'agent anti-gélifiant peut aussi contenir des sels métalliques. Les métaux des sels métalliques selon l'invention sont choisis parmi le zinc, le cadmium, le mercure, le cuivre, l'argent, le nickel, le platine, le fer, le magnésium, le calcium et leurs mélanges. Parmi les sels appropriés pour l'invention, on peut citer les carboxylates, les nitrates, les carbonates, les hydrates, les halides, les phosphates, les perchlorate, les sulfates, les sulphonates, les oxydes, les stéarates, les naphténates, les citrates et leurs mélanges.

On peut citer par exemple, les oxydes de zinc, les oxydes de calcium, les oxydes de magnésium, les oxydes de fer, les oxydes de cuivre, les stéarates de zinc, les palmitates de calcium, les citrates de magnésium.

Le liant hydrocarboné concentré selon l'invention comprend de 0 à 2% en masse d'agent anti-gélifiant, de préférence de 0,1 à 0,5%.

Dans le cas où le polymère de l'invention est choisi parmi les polymères réticulables, on emploie un agent réticulant pour assurer et/ou faciliter la réticulation. Cet agent réticulant peut être de nature très variée et est choisi en fonction du ou des type(s) de polymère(s) contenu(s) dans le liant concentré selon l'invention.

L'agent réticulant est choisi dans le groupe formé par (i) les agents de couplage donneur de soufre, (ii) les agents de fonctionnalisation pris parmi les acides ou esters carboxyliques à groupements thiols ou disulfures et (iii) les composés peroxydes générant des radicaux libres.

L'agent de couplage donneur de soufre que l'on utilise pour produire une liant concentré réticulé, peut consister en un produit choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

L'agent de couplage donneur de soufre, le soufre élémentaire, les polysulfures d'hydrocarbyle, les accélérateurs de vulcanisation donneurs de soufre et les accélérateurs de vulcanisation non donneurs de soufre susceptibles d'être utilisés sont décrits dans le brevet EP797629 dans les paragraphes [14] à [24]. Le contenu de ces paragraphes est incorporé à la présente description par référence.

L'agent de fonctionnalisation que l'on utilise pour produire un liant concentré est décrit dans le brevet EP0907686 page 3 ligne 33 à page 11 ligne 28. Le contenu de ces lignes est incorporé à la présente description par référence.

Le composé peroxydé susceptible d'être utilisé est décrit dans le brevet EP0907686 page 11 ligne 29 à page 12 ligne 2. Le contenu de ces lignes est incorporé à la présente description par référence.

Le liant concentré selon l'invention comprend de 0 à 2% en masse d'agent réticulant, de préférence de 0,1 à 0,5%.

La formulation du liant concentré d'après l'invention permet au liant concentré d'avoir une gélification retardée et aussi d'être pompable, puisqu'il présente une viscosité dynamique à 180°C inférieure à 3000 mPa.s, de préférence comprise de 500 à 2000 mPa.s ou encore de 800 à 1500 mPa.s.

## EXEMPLES

On prépare des liants concentrés témoins, ainsi que des liants concentrés selon l'invention pour évaluer l'influence de chacun des constituants sur les caractéristiques physicomécaniques des liants concentrés en polymère.

Les constituants et les teneurs des différents constituants des liants concentrés 1 à 5 sont consignés dans le tableau 1 ci-dessous, les teneurs sont exprimées en pourcentage :

Tableau 1 :

| Liant | 1 | 2 | 3 | 4 | 5 |
|---|---|---|---|---|---|
| Base molle aromatique | 62 | 0 | 69.4 | 62.2 | 51 |
| Bitume | 17.4 | 79.4 | 0 | 17.5 | 23.4 |
| Polymère | 20 | 20 | 30 | 20 | 20 |
| Cire | 0 | 0 | 0 | 0 | 5 |
| Agent anti-gélifiant | 0.3 | 0.3 | 0.3 | 0 | 0.3 |
| Agent réticulant | 0.3 | 0.3 | 0.3 | 0.3 | 0.3 |

- La base molle aromatique est une base molle ayant une viscosité cinématique à 100°C de 70 mm$^2$/s et un point éclair Cleaveland supérieur à 230°C.
- Le bitume est bitume de pénétrabilité égale à 45 selon la norme EN1426.
- Le polymère est un copolymère diséquencé de styrène et de butadiène tel que le Dynasol 540.
- La cire est l'éthylène-bis(stéaramide).
- L'agent anti-gélifiant est la Polyram L200®.
- L'agent réticulant est du soufre.

On opère dans les conditions suivantes :

Dans un réacteur maintenu à 185°C et sous agitation, on introduit la base molle aromatique et le bitume. On maintient le mélange base molle aromatique/bitume sous agitation pendant une heure, puis on ajoute le polymère et la cire. Le contenu du réacteur est ensuite maintenu à 185°C sous agitation pendant 15 heures jusqu'à l'obtention d'une masse homogène. On ajoute ensuite l'agent anti-gélifiant, puis le soufre. On maintient le milieu réactionnel ainsi formé à 185°C pendant 6 heures pour produire les liants concentrés **1** à **5**.

## Résultats

Tableau 2 :

| Liant | 1 | 2 | 3 | 4 | 5 |
|---|---|---|---|---|---|
| Pénétrabilité (0,1 mm) (a) | 88 | 30 | 72 | 80 | 50 |
| TBA (°C) (b) | 75 | > 130 | 82.2 | > 130 | 125 |
| IP(c) | 5.31 | > 10 | 5.67 | > 10 | 8.7 |
| Viscosité dynamique à 180°C (mPa.s) (d) | 1318 | Non mesurable gel | 2257 | 1206 | 1052 |

(suite)

| Liant | 1 | 2 | 3 | 4 | 5 |
|---|---|---|---|---|---|
| Tenue à la gélification (e) | S3 après 14 jours | S4 à la sortie du réacteur | S3 après 14 jours | S3 après 8 jours | S3 après 5 jours |

(a) Selon la norme EN 1426 (b) Température Bille et Anneau, selon la norme EN1427 (c) Indice de pénétrabilité Pfeiffer défini par la formule de calcul suivante :

$$IP = \frac{1952 - 500 \times \log(P_{25}) - 20 \times TBA}{50 \times \log(P_{25}) - TBA - 120}$$

(d) Selon la norme ASTM D2171 (e) L'essai de gélification consiste à laisser une boite de 1kg de liant à 180°C. A chaque temps de mesure, on plonge une baguette de bois dans la boite et on examine la façon dont s'écoule le liant. Une échelle de 0 à 4 permet de décrire l'état du liant.

- S0: liant fluide, s'écoule goutte à goutte
- S1: liant liquide, s'écoule en un mince filet continu
- S2: liant visqueux, s'écoule en un large filet continu
- S3: liant très visqueux, s'écoule en une nappe
- S4: liant solide

On considère qu'un liant a gélifié lorsqu'il atteint l'état S3. On peut alors mesurer le temps de stockage nécessaire pour atteindre cet état.

Les liants concentrés 1 et 2 sont tous deux concentrés à 20% de polymère. Le liant concentré 1 est stable pendant plusieurs jours. Le liant concentré 1 ne devient très visqueux qu'après 14 jours, sa gélification est retardée. De plus le liant concentré 1 présente une viscosité permettant un pompage à une température inférieure à 180°C (1318 mPa.s). Le liant concentré 2, lui, gélifie immédiatement dès la sortie du réacteur et sa viscosité n'est pas mesurable. Le liant concentré 2 gélifie très vite et n'est pas pompable. Pour obtenir un liant concentré stable, ces deux exemples démontrent que la présence de la base molle aromatique selon l'invention est indispensable. Sans cette base molle aromatique, il est impossible d'obtenir des liants concentrés à 20 % de polymère.

Par contre, comme le montre l'exemple 3, la base bitume n'est pas indispensable. Il est possible d'obtenir un liant concentré 3 à 30% de polymère stable plusieurs jours. Le liant concentré 3 ne devient très visqueux qu'après 14 jours et présente une viscosité permettant un pompage à une température inférieure à 180°C (2257 mPa.s).

D'après l'exemple 4, il n'est pas indispensable d'ajouter un agent anti-gélifiant pour obtenir des liants concentrés stables plusieurs jours et pompables. Cet agent anti-gélifiant peut cependant être ajouté aux liants concentrés pour retarder un peu plus le phénomène de gélification.

Pour vérifier si les liants concentrés selon l'invention peuvent conduire à des liants bitumineux dilués répondant aux spécifications, les liants concentrés 1 et 5 sont dilués avec un bitume de grade 35/50 jusqu'à obtention de deux liants bitumineux dilués **A** et **B** à 3% de polymère.

Tableau 3 :

| Liant | A | B |
|---|---|---|
| Pénétrabilité (0,1 mm) (a) | 67 | 39 |
| TBA (°C) (b) | 56 | 56 |
| IP (c) | 0.96 | -0.25 |
| Retour élastique (%) (f) | 91 | 61 |
| Viscosité dynamique à 180°C (mPa.s) (d) | 190 | 42 |
| Elongation maximale à 5°C (%) (g) | > 700 | 500 |
| Stabilité au stockage $\Delta$TBA (°C) (h) | 0.2 | 0.4 |

(suite)

| Liant | A | B |
|---|---|---|
| Tenue à la gélification (e) | S0 après 14 jours | S0 après 14 jours |

(a) Selon la norme EN 1426 (b) Température Bille et Anneau, selon la norme EN1427 (c) Indice de pénétrabilité Pfeiffer défini par la formule de calcul suivante :

$$IP = \frac{1952 - 500 \times \log(P_{25}) - 20 \times TBA}{50 \times \log(P_{25}) - TBA - 120}$$

(d) Selon la norme ASTM D2171 (e) L'essai de gélification consiste à laisser une boite de 1kg de liant à 180°C. A chaque temps de mesure, on plonge une baguette de bois dans la boite et on examine la façon dont s'écoule le liant. Une échelle de 0 à 4 permet de décrire l'état du liant.

- S0: liant fluide, s'écoule goutte à goutte.
- S1: liant liquide: s'écoule en un mince filet continu
- S2: liant visqueux: s'écoule en un large filet continu
- S3: liant très visqueux: s'écoule en une nappe
- S4: liant solide

On considère qu'un liant a gélifié lorsqu'il atteint l'état S3. On peut alors mesurer le temps de stockage nécessaire pour atteindre cet état.

(f) Selon la norme NF T 66-040

(g) Test de traction à 5°C, avec une vitesse d'étirement de 500 mm/mn selon la norme NF EN 13587

(h) Essai de 3 jours à 180°C selon la norme NF EN 13399

Les exemples **A** et **B** démontrent que les liants dilués obtenus à partir de liants concentrés selon l'invention présentent des caractéristiques satisfaisantes, conformes aux exigences usuelles d'un mélange bitume-polymère. En particulier, les liants dilués **A** et **B** présentent des propriétés élastiques satisfaisantes.

L'exemple **B** montre qu'il est possible d'ajouter des paraffines aux liants selon l'invention pour renforcer le liant dilué à basse température et la fluidification du liant dilué à haute température.

**Revendications**

1. Liant concentré en polymère comprenant au moins 70% en masse d'une base pétrolière molle aromatique, éventuellement une base bitumineuse, et au moins un polymère, **caractérisé en ce que** la teneur en polymère dans le liant concentré est supérieure ou égale à 20% en masse, de préférence supérieure ou égale à 25% en masse et **en ce que** la base pétrolière molle aromatique comprend une ou plusieurs coupes pétrolières aromatiques provenant de la désaromatisation de coupes pétrolières issues du raffinage du pétrole brut et/ou provenant de la désaromatisation de bases lubrifiantes.

2. Liant concentré en polymère selon la revendication 1 **caractérisé en ce que** le liant concentré comprend de 0 à 30% en masse de base bitumineuse, de préférence de 1% à 25% en masse.

3. Liant concentré en polymère selon la revendication 1 ou 2 **caractérisé en ce que** le liant concentré comprend en outre de 0 à 2% en masse, de préférence de 0,1 à 0,5%, d'agent anti-gélifiant.

4. Liant concentré en polymère selon l'une quelconque des revendications 1 à 3 **caractérisé en ce que** le liant concentré comprend en outre de 0 à 2% en masse d'un agent réticulant, de préférence de 0,1 à 0,5%.

5. Liant concentré en polymère selon l'une quelconque des revendications 1 à 4 **caractérisé en ce que** le liant concentré comprend en outre de 0 à 20% en masse d'une cire, de préférence de 1 à 10%.

6. Liant concentré en polymère selon l'une quelconque des revendications 1 à 5 **caractérisé en ce que** le polymère comprend un ou plusieurs copolymères à base de motifs diène conjugué et de motifs hydrocarbure monovinyl aromatique.

7. Liant concentré en polymère selon l'une quelconque des revendications 1 à 6 **caractérisé en ce que** les coupes pétrolières sont issues de la distillation sous-vide du pétrole brut.

8. Liant concentré en polymère selon la revendication 7 **caractérisé en ce que** les coupes pétrolières aromatiques ont une teneur en cycles aromatiques supérieure à 50% en poids, de préférence supérieure à 65% en poids de préférence de 50% à 80% en poids.

9. Liant concentré en polymère selon la revendication 5 **caractérisé en ce que** la cire est choisie parmi les paraffines ou les amides d'acides gras.

10. Liant concentré en polymère selon la revendication 4 **caractérisé en ce que** l'agent réticulant est choisi dans le groupe formé par (i) les agents de couplage donneur de soufre, (ii) les agents de fonctionnalisation pris parmi les acides ou esters carboxyliques à groupements thiols ou disulfures et (iii) les composés peroxydes générant des radicaux libres.

11. Procédé de préparation de liants concentrés selon l'une quelconque des revendications 1 à 10 **caractérisé en ce que** :

   a) on introduit une base molle aromatique et éventuellement une base bitumineuse dans un récipient équipé de moyens de mélange, et on porte le mélange à une température comprise entre 140 et 200°C,
   b) on introduit au moins 10% en masse de polymère et de 0 à 20% en masse de cire,
   c) on chauffe la composition à une température comprise entre 140 et 200°C, sous agitation, jusqu'à l'obtention d'une composition homogène.
   d) on introduit de 0 à 2% en masse d'agent anti-gélifiant et de 0 à 2% en masse d'agent réticulant.
   e) on chauffe la composition à une température comprise entre 140 et 200°C, sous agitation, jusqu'à l'obtention d'un liant concentré homogène.

12. Utilisation du liant concentré selon l'une quelconque des revendications 1 à 10 pour préparer un liant dilué bitume/polymère comprenant la dilution dudit liant concentré en polymère avec du bitume.

13. Utilisation selon la revendication 12 du liant bitume/polymère dilué directement ou après mise en émulsion à la réalisation de revêtements, notamment revêtements routiers du type enduits superficiels, à la production d'enrobés mis en place à chaud ou à froid, ou encore à la réalisation de revêtements d'étanchéité.

14. Utilisation selon la revendication 12 du liant bitume/polymère dilué en mélange avec des granulats pour fabriquer un enduit superficiel, un enrobé à chaud, un enrobé à froid, un enrobé coulé à froid, une grave émulsion ou une couche de roulement.


**Patentansprüche**

1. Konzentrierter Binder aus Polymer, umfassend mindestens 70 Masse-% einer aromatischen weichen Erdöl-Basis, gegebenenfalls eine Bitumen-Basis und mindestens ein Polymer, **dadurch gekennzeichnet, dass** der Gehalt an Polymer im konzentrierten Binder größer oder gleich 20 Masse-% ist, vorzugsweise größer oder gleich 25 Masse-%, und dadurch, dass die aromatische weiche Erdöl-Basis eine oder mehrere aromatische Erdölfraktionen umfasst, die von der Entaromatisierung von Erdölfraktionen aus der Raffinierung von Rohöl stammen und/oder aus der Entaromatisierung von Schmiermittel-Basen stammen.

2. Konzentrierter Binder aus Polymer nach Anspruch 1, **dadurch gekennzeichnet, dass** der konzentrierte Binder von 0 bis 30 Masse-% Bitumen-Basis umfasst, vorzugsweise von 1 Masse-% bis 25 Masse-%.

3. Konzentrierter Binder aus Polymer nach Anspruch 1 oder 2, **dadurch gekennzeichnet, dass** der konzentrierte Binder außerdem von 0 bis 2 Masse-%, vorzugsweise von 0,1 bis 0,5 Masse-%, eines Antigelierungsmittels umfasst.

4. Konzentrierter Binder aus Polymer nach einem der Ansprüche 1 bis 3, **dadurch gekennzeichnet, dass** der konzentrierte Binder außerdem von 0 bis 2 Masse-% eines Vernetzungsmittels umfasst, vorzugsweise von 0,1 bis 0,5 %.

5. Konzentrierter Binder aus Polymer nach einem der Ansprüche 1 bis 4, **dadurch gekennzeichnet, dass** der konzentrierte Binder außerdem von 0 bis 20 Masse-% eines Wachses umfasst, vorzugsweise von 1 bis 10 %.

6. Konzentrierter Binder aus Polymer nach einem der Ansprüche 1 bis 5, **dadurch gekennzeichnet, dass** das Polymer ein oder mehrere Copolymere auf der Basis von konjugierten Dien-Einheiten und aromatischen Monovinylkohlenwasserstoff-Einheiten umfasst.

7. Konzentrierter Binder aus Polymer nach einem der Ansprüche 1 bis 6, **dadurch gekennzeichnet, dass** die Erdölfraktionen aus der Vakuumdestination von Rohöl stammen.

8. Konzentrierter Binder aus Polymer nach Anspruch 7, **dadurch gekennzeichnet, dass** die aromatischen Erdölfraktionen einen Gehalt an aromatischen Ringen von mehr als 50 Gew.-% aufweisen, vorzugsweise mehr als 65 Gew.-%, vorzugsweise von 50 Gew.-% bis 80 Gew.-%.

9. Konzentrierter Binder aus Polymer nach Anspruch 5, **dadurch gekennzeichnet, dass** das Wachs aus Paraffinen oder Fettsäureamiden ausgewählt ist.

10. Konzentrierter Binder aus Polymer nach Anspruch 4, **dadurch gekennzeichnet, dass** das Vernetzungsmittel ausgewählt ist aus der Gruppe bestehend aus (i) schwefelspendenden Kopplungsmitteln, (ii) Funktionalisierungsmitteln, gewählt aus Carbonsäuren oder Carbonsäureestern mit Thiol- oder Disulfidgruppen, und (iii) Peroxidverbindungen, die freie Radikale erzeugen.

11. Verfahren zur Herstellung von konzentrierten Bindern nach einem der Ansprüche 1 bis 10, **dadurch gekennzeichnet, dass**:

   a) eine weiche aromatische Basis und gegebenenfalls eine Bitumen-Basis in einen Behälter eingebracht werden, der mit Mischmitteln ausgestattet ist, und die Mischung auf eine Temperatur zwischen 140 und 200°C gebracht wird,
   b) mindestens 10 Masse-% Polymer und von 0 bis 20 Masse-% Wachs eingebracht werden,
   c) die Zusammensetzung auf eine Temperatur zwischen 140 und 200°C unter Rühren erhitzt wird, bis eine homogene Zusammensetzung erhalten wird,
   d) von 0 bis 2 Masse-% Antigelierungsmittel und von 0 bis 2 Masse-% Vernetzungsmittel eingebracht werden,
   e) die Zusammensetzung auf eine Temperatur zwischen 140 und 200°C unter Rühren erhitzt wird, bis ein homogener konzentrierter Binder erhalten wird.

12. Verwendung des konzentrierten Binders nach einem der Ansprüche 1 bis 10 zur Herstellung eines verdünnten Bitumen/Polymer-Binders, umfassend die Verdünnung des konzentrierten Binders aus Polymer mit Bitumen.

13. Verwendung nach Anspruch 12 des verdünnten Bitumen/Polymer-Binders direkt oder nach Emulgieren zur Herstellung von Beschichtungen, insbesondere Straßenbeschichtungen vom Typ von Oberflächendecken, zur Herstellung von heiß oder kalt aufgebrachten Beschichtungen oder auch zur Herstellung von Dichtungsbeschichtungen.

14. Verwendung nach Anspruch 12 des verdünnten Bitumen/Polymer-Binders in Mischung mit Granulaten zur Herstellung einer Oberflächendecke, einer heiß aufgebrachten Beschichtung, einer kalt aufgebrachten Beschichtung, einer kalt gegossenen Beschichtung, einer schweren Emulsion oder einer Laufschicht.

## Claims

1. Polymer-concentrated binder comprising at least 70% by weight of an aromatic soft petroleum base, optionally a bituminous base, and at least one polymer, **characterized in that** the content of polymer in the concentrated binder is greater than or equal to 20% by weight, preferably greater than or equal to 25% by weight, and **in that** the aromatic soft petroleum base comprises one or more aromatic petroleum cuts originating from the dearomatization of petroleum cuts resulting from the refining of crude oil and/or originating from the dearomatization of lubricating bases.

2. Polymer-concentrated binder according to Claim 1, **characterized in that** the concentrated binder comprises from 0 to 30% by weight, preferably from 1% to 25% by weight, of bituminous base.

3. Polymer-concentrated binder according to Claim 1 or 2, **characterized in that** the concentrated binder further comprises from 0 to 2%, preferably from 0.1 % to 0.5%, by weight of anti-gelling agent.

4. Polymer-concentrated binder according to any one of Claims 1 to 3, **characterized in that** the concentrated binder further comprises from 0 to 2%, preferably from 0.1% to 0.5%, by weight of a crosslinking agent.

5. Polymer-concentrated binder according to any one of Claims 1 to 4, **characterized in that** the concentrated binder further comprises from 0 to 20%, preferably from 1% to 10%, by weight of a wax.

6. Polymer-concentrated binder according to any one of Claims 1 to 5, **characterized in that** the polymer comprises one or more copolymers based on conjugated diene units and on aromatic monovinyl hydrocarbon units.

7. Polymer-concentrated binder according to any one of Claims 1 to 6, **characterized in that** the petroleum cuts are derived from the vacuum distillation of crude oil.

8. Polymer-concentrated binder according to Claim 7, **characterized in that** the aromatic petroleum cuts have an aromatic ring content of greater than 50% by weight, preferably greater than 65% by weight, preferably from 50% to 80% by weight.

9. Polymer-concentrated binder according to Claim 5, **characterized in that** the wax is selected from paraffins or fatty acid amides.

10. Polymer-concentrated binder according to Claim 4, **characterized in that** the crosslinking agent is selected from the group consisting of (i) sulfur donor coupling agents, (ii) functionalizing agents chosen from carboxylic acids or esters having thiol or disulfide groups, and (iii) peroxide compounds that generate free radicals.

11. Process for preparing concentrated binders according to any one of Claims 1 to 10, **characterized in that**:

 a) an aromatic soft base and optionally a bituminous base are introduced into a container equipped with mixing means, and the mixture is brought to a temperature between 140°C and 200°C,
 b) at least 10% by weight of polymer and from 0 to 20% by weight of wax are introduced,
 c) the composition is heated to a temperature between 140°C and 200°C, with stirring, until a homogeneous composition is obtained,
 d) from 0 to 2% by weight of anti-gelling agent and from 0 to 2% by weight of crosslinking agent are introduced, and
 e) the composition is heated to a temperature between 140°C and 200°C, with stirring, until a homogeneous concentrated binder is obtained.

12. Use of the concentrated binder according to any one of Claims 1 to 10 for preparing a bitumen/polymer dilute binder comprising the dilution of said polymer-concentrated binder with bitumen.

13. Use according to Claim 12 of the dilute bitumen/polymer binder directly or after emulsification in the production of surfacings, in particular road surfacings of the surface dressing type, in the production of hot-laid or cold-laid bituminous mixes, or else in the production of waterproof surfacings.

14. Use according to Claim 12 of the dilute bitumen/polymer binder as a mixture with aggregates in order to manufacture a surface dressing, a hot bituminous mix, a cold bituminous mix, a cold-poured bituminous mix, an emulsion-treated gravel or a surface course.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2376188
- FR 2528439
- EP 0360656 A
- EP 0299820 A
- JP 58204203 A
- EP 20203 A
- EP 409683 A
- GB 414336 A
- EP 1572807 A
- EP 0837909 A
- EP 1576058 A
- FR 2259824
- EP 797629 A
- EP 0907686 A